# EUROPÄISCHE PATENTANMELDUNG

(11) **EP 4 782 145 A1**
(43) Veröffentlichungstag der Anmeldung: **29.07.2026**
(21) Anmeldenummer: 25216899.2
(22) Anmeldetag: 19.11.2025
(51) Int. Cl.: B23Q 1/62, A61C 13/00, B23Q 3/08

(54) **VORRICHTUNG ZUR HERSTELLUNG VON DENTAL-RETAINERN**

(30) Priorität: 24.01.2025 AT 500372025
(71) Anmelder: Huber, Martin, 5452 Pfarrwerfen (AT); Wörmer, Alfons, 5500 Bischofshofen (AT)
(72) Erfinder: Huber, Martin, 5452 Pfarrwerfen (AT); Wörmer, Alfons, 5500 Bischofshofen (AT)
(74) Vertreter: Hübscher & Partner Patentanwälte GmbH

(57) **Zusammenfassung**

Es wird eine Vorrichtung zur Herstellung von Dental-Retainern (22) aus einem Rohling (4), mit einer eine Bearbeitungsebene aufspannenden Bearbeitungsplattform (1) und einer Fräseinheit (2), die ein Fräswerkzeug (3) zur Bearbeitung des Rohlings (4) auf der Bearbeitungsplattform (1) umfasst, wobei das Fräswerkzeug (3) relativ zur Bearbeitungsplattform (1) ausschließlich in der Bearbeitungsebene verlagerbar ist, beschrieben. Um eine derartige Vorrichtung so auszugestalten, dass trotz einfachem und vergleichsweise kostengünstigem Aufbau eine Herstellung von Dental-Retainern (22) ermöglicht wird, wird vorgeschlagen, dass eine Gefrierspanneinheit (12) zum Festlegen des Rohlings (4) auf der Bearbeitungsplattform (1) unter Ausbildung einer den Rohling (4) wenigstens teilweise umgebenden Eisschicht (13) vorgesehen ist und dass das Fräswerkzeug (3) einen in einer Bearbeitungsposition normal zur Bearbeitungsebene verlaufenden Grundkörper (14) umfasst, an dessen freiem Endabschnitt eine mantelseitig umlaufende Fräsnut (21) angeordnet ist, die in der Bearbeitungsebene relativ gegenüber dem gefriergespannten Rohling (4) anstellbar ist.

## Beschreibung

Die Erfindung bezieht sich auf eine Vorrichtung zur Herstellung von Dental-Retainern aus einem Rohling, mit einer eine Bearbeitungseben aufspannenden Bearbeitungsplattform und einer Fräseinheit, die ein Fräswerkzeug zur Bearbeitung des Rohlings auf der Bearbeitungsplattform umfasst, wobei das Fräswerkzeug relativ zur Bearbeitungsplattform ausschließlich in der Bearbeitungsebene verlagerbar ist.

Dental-Retainer, welche beispielsweise aus biokompatiblen Metallen wie Titan oder geeigneten Edelstahllegierungen gefertigt sind, stabilisieren die Zahnstellung nach einer kieferorthopädischen Behandlung. Die Retainer werden dabei in der Regel mithilfe eines CNC-Fräsverfahrens aus entsprechenden Halbzeugen, insbesondere Blechen, herausgearbeitet. Derartige Herstellungsverfahren sind beispielsweise aus der CA3041246A1 bekannt. Aufgrund dessen, dass die Retainer passgenau an die Zahnkontur des jeweiligen Patienten angepasst werden müssen, ist eine hohe Fertigungspräzision erforderlich. Bedingt durch die damit verbundenen Anforderungen an entsprechende Modellierungs- und Bearbeitungsvorrichtungen geht bei derartigen Herstellverfahren ein vergleichsweise hoher Zeit- und Kostenaufwand einher.

Der Erfindung liegt somit die Aufgabe zugrunde, eine Vorrichtung der eingangs geschilderten so auszugestalten, dass trotz einfachem und vergleichsweise kostengünstigem Aufbau eine Herstellung von Dental-Retainern ermöglicht wird, die den zahnmedizinisch bedingten Präzisionsanforderungen Genüge leistet. Insbesondere soll die Voraussetzung für eine Vorrichtung geschaffen werden, die in Zahnarztpraxen im sogenannten Chairside-Bereich zum Einsatz kommen kann und somit eine rasche und unmittelbare Verfügbarkeit individuell gefertigter Dental-Retainer ermöglicht.

Die Erfindung löst die gestellte Aufgabe dadurch, dass eine Gefrierspanneinheit zum Festlegen des Rohlings auf der Bearbeitungsplattform unter Ausbildung einer den Rohling wenigstens teilweise umgebenden Eisschicht vorgesehen ist und dass das Fräswerkzeug einen in einer Bearbeitungsposition normal zur Bearbeitungsebene verlaufenden Grundkörper umfasst, an dessen freiem Endabschnitt eine mantelseitig umlaufende Fräsnut angeordnet ist, die in der Bearbeitungsebene relativ gegenüber dem gefriergespannten Rohling anstellbar ist. Zufolge dieser Merkmale wird ein für die Fräsbearbeitung schnelles und zuverlässiges Festlegen des Rohlings ohne mechanische Klemmeinrichtungen an der Bearbeitungsplattform ermöglicht, wobei ein zeitaufwändiges Nachjustieren des Rohlings durch den Bediener entfallen kann. Die Gefrierspanneinheit bildet eine Eisschicht derart aus, dass darin der Rohling auf der Bearbeitungsplattform wenigsten teilweise, bevorzugt vollständig eingebettet ist. Es hat sich dabei herausgestellt, dass insbesondere im Zusammenhang mit den für Dental-Retainern verwendeten Titanlegierungen sowie den hierfür verwendeten Rohlingstärken von unter 1 mm die Bildung einer Eisschicht bewirkt werden kann, die sich bezogen auf die Normalrichtung bzw. z-Richtung zur Bearbeitungsebene sowohl ober- als auch unterhalb des Rohlings ausbildet. Der Rohling ist demnach im Wesentlichen zentral und parallel zur Bearbeitungsebene in der Eisschicht eingebettet. In Zusammenwirkung mit der Fräsnutkontur des lateral an den Rohling-Eisschicht-Verbund anstellbaren Fräswerkzeug ergibt sich erfindungsgemäß somit der Vorteil, dass der Rohling mitsamt der Eisschicht vom Fräswerkzeug bearbeitet werden kann, wobei während des Fräsvorgangs der unbearbeitete Teil des Rohling durch die noch nicht abgetragenen Eisschichtbereiche auf der Bearbeitungsplattform festgelegt bleibt. In einer vorteilhaften Ausführungsform kann die Gefrierspanneinheit derart ausgebildet sein, dass während der Bearbeitung des gefriergespannten Rohlings durch das Fräswerkzeug bedarfsweise Gefriermittel auf die Bearbeitungsplattform so nachgefördert wird und / oder die Bearbeitungsplattform unter Ausbildung einer Eisschicht so gekühlt wird, dass bereits abgefräste Eisschichtbereiche wiederhergestellt werden.

Eine kompakte und robuste Bauweise ergibt sich, wenn die Bearbeitungsplattform gegenüber dem in der Bearbeitungsposition stationären Fräswerkzeug in der Bearbeitungsebene, vorzugsweise in einer vorgegebenen x-y-Richtung, also ausschließlich entlang zwei parallel zur Bearbeitungsebene sowie orthogonal zueinander verlaufenden Bearbeitungsrichtungen, verlagerbar ist. Besonders günstige konstruktive Bedingungen ergeben sich in diesem Zusammenhang, wenn die Bearbeitungsplattform mit einem Lagerrahmen antriebsverbunden ist, der zwei Lineareinheiten umfasst, die jeweils einer beiden parallel zur Bearbeitungsebene sowie orthogonal zueinander verlaufenden Bearbeitungsrichtungen zugeordnet sind. Dabei kann der der Lagerrahmen einen Kreuzschlitten umfassen. Obwohl das Fräswerkzeug bzw. auch die das Fräswerkzeug aufnehmende Fräseinheit an sich in Bearbeitungsposition, d.h. während des Fräsvorganges, stationär sind, kann grundsätzlich vorgesehen sein, dass beispielsweise zum Zwecke eines Werkzeugwechsels vor und nach einem Fräsvorgang das Fräswerkzeug bzw. die Fräseinheit entlang einer normal zur Bearbeitungsebene verlaufenden Hochachse verlagerbar sind.

Um auf einfache Weise ein zuverlässiges Fräsergebnis innerhalb eines vorgegebene Toleranzbereiches für den herzustellenden Dental-Retainer zu ermöglichen, wird vorgeschlagen, dass die Fräsnut einen durch deren Nutwangen vorgegebenen Öffnungswinkel im Bereich von 5° bis 15° aufspannt, wobei insbesondere das Verhältnis der Nutgrundbreite zur lichten Nutweite im Bereich von 1:1,2 bis 1:1,5, vorzugsweise von 1:1,3 bis 1:1,4, liegt. Zufolge dieser Maßnahmen wird, insbesondere beim Einsatz üblicher Titanlegierungsbleche als Rohlinge, trotz der lediglich in der Bearbeitungsebene erfolgenen Zustellbewegungen des Fräswerkzeuges nicht nur ein Materialabtrag des Rohlings in x-y-Richtung, sondern auch in z-Richtung erfolgen kann, der bei entsprechender Dimensionierung der Fräsnut ein Übermaß in z-Richtung von jeweils einem Zehntelmillimeter auf der Ober- und Unterseite des Rohlings bezogen auf die vorgegebene Endstärke des ausgefrästen Retainers aufweisen kann. Eine solche Toleranz stellt dabei einen guten Kompromiss zwischen einfacher Handhabung und geringem Justieraufwand einerseits, sowie ausreichender Fertigungspräzision andererseits dar.

Um in diesem Zusammenhang eine für den fertigen Dental-Retainer vorteilhafte Bombierung zu erreichen, empfiehlt es sich, dass die Fräsnut in den Übergangsbereichen zwischen den Nutwangen und dem diese verbindenden Nutgrund verrundet ist, wobei das Verhältnis des Verrundungsradius zur Nutgrundbreite im Bereich von 1:5 bis 1:15, vorzugsweise von 1:9 bis 1:13, liegt.

Um auf konstruktiv günstige Weise eine Einbettung des Rohlings in einer Eisschicht zu ermöglichen, wird vorgeschlagen, dass die Bearbeitungsplattform, insbesondere drei, sich normal zur Bearbeitungsebene erstreckende Rohlingauflagen zur Beabstandung des Rohlings von der Bearbeitungsplattform aufweist. Zufolge dieser Merkmale liegt in der Bearbeitungsposition nicht satt auf der Bearbeitungsplattform auf, sondern es bildet sich ein Abstand zwischen der Rohlingunterseite und der Bearbeitngsplattform. Folglich kann sich auf einfache Weise eine Eisschicht auch unterhalb des Rohlings bilden, sodass dieser letztlich in der Eisschicht eingebettet ist. Vorzugsweise sind drei Rohlingauflagen vorgesehen, die bezüglich der Bearbeitungsebene versetzt zueinander angeordnet und dabei insbesondere ein insbesondere ein Auflagedreieck aufspannen. Eine zuverlässige Vorpositionierung sowie eine präzise Bearbeitung des Rohlings wird insbesondere erreicht, wenn die Rohlingauflagen jeweils einen Auflagekörper umfassen, der eine Auflageschulter sowie einen von der Auflageschulter in Auflagekörperlängsrichtung nach oben abragenden Positionierzapfen für den Rohling aufweist. Der Positionierzapfen kann hierbei in eine entsprechende Positionieröffnung, beispielsweise eine Durchgangsbohrung, formschlüssig eingreifen bzw. diese durchsetzen, wohingegen der in Bearbeitungsposition der Bearbeitungsplattform zugewandte, rohlingsunterseitige Randbereich der Positionieröffnung auf der Auflageschulter aufliegt.

Die erfindungsgemäßen Maßnahmen ermöglichen eine kompakte und kosteneffiziente Fertigung der Vorrichtung selbst, was eine entscheidende Voraussetzung für den Chairside-Einsatz in Zahnarztpraxen darstellt.

Ein vor diesem Hintergrund praxistauglicher Aufbau der Vorrichtung lässt sich beispielsweise erzielen, wenn ein die Bearbeitungsplattform und die Gefrierspanneinheit aufnehmendes Gehäuse vorgesehen ist, das eine mit einem Deckel verschließbare Bearbeitungsöffnung aufweist, wobei die Fräseinheit an dem zwischen einer Offenstellung und einer Schließstellung verlagerbaren Deckel angeordnet ist. Vorzugsweise ist dabei das Fräswerkzeug in Schließstellung des Deckels bereits in der Bearbeitungsposition. Für eine, insbesondere in Bezug auf die Bearbeitungsposition des Fräswerkzeuges, positionsgetreue und spielfreie Verriegelung des Deckels kann ein konischer Ratsbolzen vorgesehen sein, der den Deckel gegenüber dem Gehäuse in Schließstellung festlegt. Für einen einfachen Werkzeugwechsel kann außerdem vorgesehen sein, dass die Fräseinheit eine Schnellwechselvorrichtung für das Fräswerkzeug umfasst. Um der Bedienperson auf konstruktiv einfache Weise einen zuverlässigen Hinweis zu liefern, ob die für eine ordnungsgemäße Gefrierfunktion notwendige Gefriermittelmenge eingehalten wird, kann die Gefrierspanneinheit einen Gefriermittelbehälter aufweisen, der mit einer an der Gehäuseaußenseite angeordneten Füllstandsanzeige strömungsverbunden ist. Die Benutzerfreundlichkeit kann außerdem weiter verbessert werden, wenn unterhalb der Bearbeitungsplattform eine aus dem Gehäuse entnehmbare Auffangwanne für überschüssiges und / oder abgetautes Gefriermittel angeordnet ist.

Die Erfindung bezieht sich auch auf ein Verfahren zur Herstellung von Dental-Retainern aus einem Rohling, der mithilfe eines Fräswerkzeuges bearbeitet wird. Der Rohling ist vorzugsweise aus Metall, insbesondere aus einer Titan- oder Edelstahllegierung. Günstige Fräsbedingungen ergeben sich außerdem, wenn der Rohling ein Blech ist, vorzugsweise mit einer Blechstärke von weniger als 1 mm, noch bevorzugter weniger als 0,8 mm, noch bevorzugter weniger als 0,6 mm, besonders bevorzugt höchstens 0,5 mm. Der Rohling wird auf einer eine Bearbeitungsebene aufspannenden Bearbeitungsplattform gefriergespannt, und wobei zum Materialabtrag vom Rohling die Relativbewegungen zwischen diesem und dem dabei vorzugsweise stationären Fräswerkzeug ausschließlich in der Bearbeitungsebene erfolgen. Um während der Bearbeitung des gefriergespannten Rohlings durch das Fräswerkzeug die Gefahr eines Verrutschens des Rohlings auf der Bearbeitungsplattform zu reduzieren, kann bedarfsweise Gefriermittel auf die Bearbeitungsplattform so nachgefördert und / oder die Bearbeitungsplattform unter Ausbildung einer Eisschicht so gekühlt werden, dass bereits abgefräste Eisschichtbereiche wiederhergestellt werden. Nach dem Fräsvorgang kann gegebenenfalls noch vorhanden Eisschichtbereiche abgetaut werden, wobei das Abtauen durch eine aktive Temperierung der Bearbeitungsplattform bzw. des Bearbeitungsbereiches oberhalb der Bearbeitungsplattform oder aber auch passiv durch die Umgebungstemperatur erfolgen kann.

In der Zeichnung ist der Erfindungsgegenstand beispielsweise dargestellt. Es zeigen
- Fig. 1: einen schematischen Schrägriss einer erfindungsgemäßen Vorrichtung, welches ein Gehäuse sowie einen in Offenstellung dargestellten Deckel umfasst,
- Fig. 2: einen Schnitt entlang der Linie II-II in einem größeren Maßstab,
- Fig. 3: einen Schnitt in Draufsicht einer der Fig. 1 entsprechenden Vorrichtung,
- Fig. 4: eine Detailansicht eines an einen Rohling-Eisschicht-Verbund Fräswerkzeuges und
- Fig. 5: eine der Fig. 1 entsprechende Detailansicht des auf der Bearbeitungsplattform aufliegenden Rohling-Eisschicht-Verbundes.

Eine erfindungsgemäße Vorrichtung weist eine Bearbeitungsplattform 1 auf, die eine gemäß dem gewählten Koordinatensystem Bearbeitungsebene in x-y-Richtung auf. Die Vorrichtung weist außerdem eine Fräseinheit 2 auf, die ein Fräswerkzeug 3 zur Bearbeitung eines Rohlings 4 auf der Bearbeitungsplattform 1 umfasst. Der Rohling 4 ist beispielsweise eines Blech auf Basis einer biokompatiblen Titanlegierung.

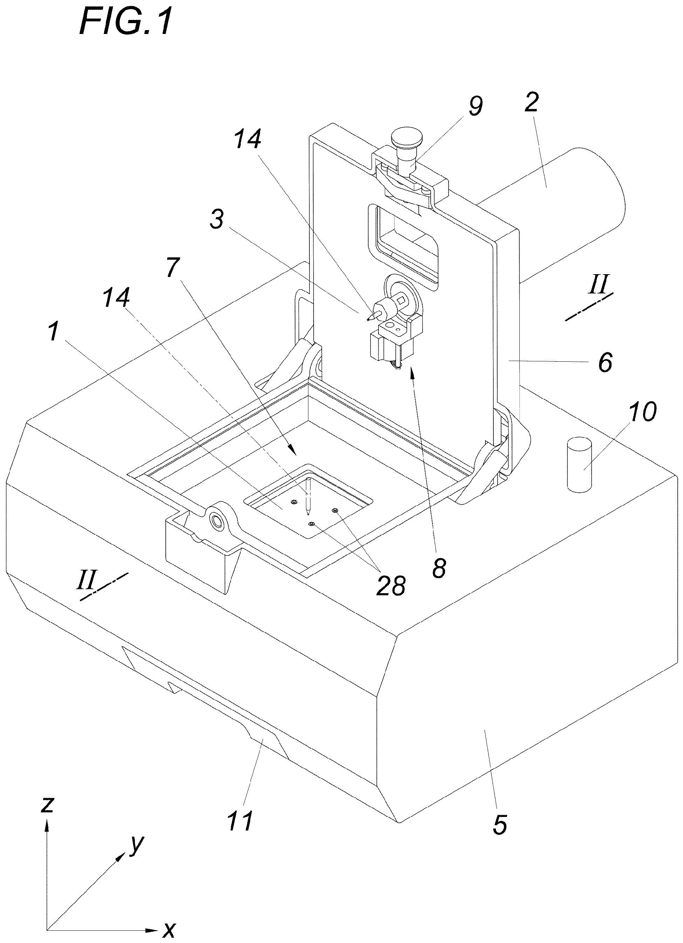

Die Bearbeitungsplattform 1 ist in einem Gehäuse 5 aufgenommen, das eine mit einem Deckel 6 verschließbare Bearbeitungsöffnung 7 aufweist. Die Fräseinheit 2 ist hierbei an dem Deckel 6 angeordnet, der zwischen der in Fig. 1 gezeigten Offenstellung und einer Schließstellung verlagerbar ist. Somit wird auch die Fräseinheit 2 samt Fräswerkzeug 3 mit dem Deckel 6 zwischen der Offenstellung und der Schließstellung mitverlagert. Die Fräseinheit 2 umfasst eine Schnellwechselvorrichtung 8 zum bedarfsweisen Austausch des auf einer Spindel gelagerten Fräswerkzeuges 3.

Zur Verriegelung des Deckels 6 umfasst das Gehäuse 5 einen konischen Ratsbolzen 9, der den Deckel 6 gegenüber dem Gehäuse 5 in Schließstellung positionsgetreu und spielfrei festlegt. Darüber hinaus ist ein nicht näher dargestellter Gefriermittelbehälter vorgesehen, der mit einer an der Gehäuseaußenseite angeordneten Füllstandsanzeige 10 strömungsverbunden ist. Unterhalb der Bearbeitungsplattform 1 ist eine aus dem Gehäuse 5 entnehmbare Auffangwanne 11 für überschüssiges und / oder abgetautes Gefriermittel angeordnet ist.

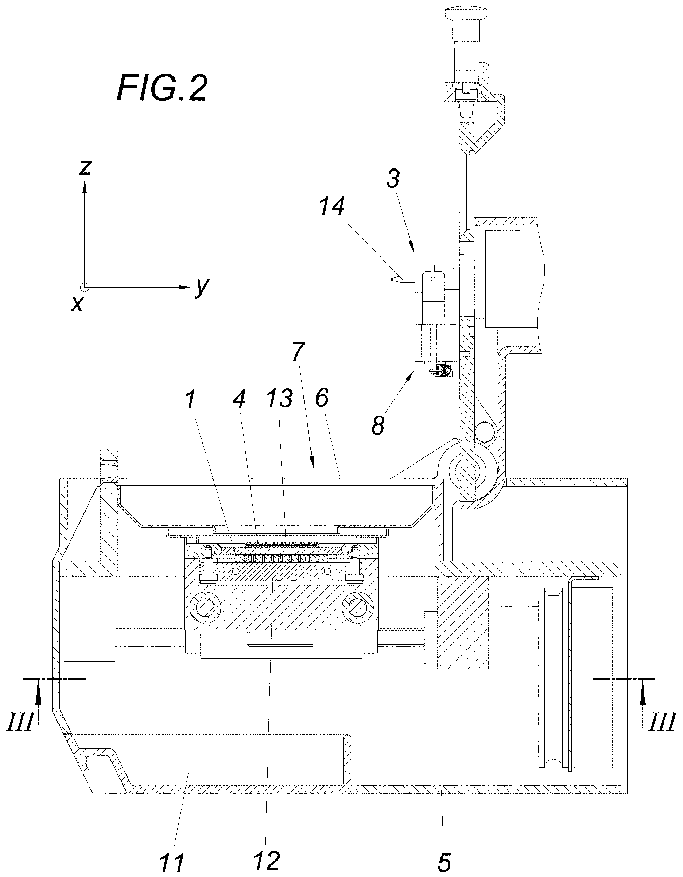

Wie dies aus Fig. 2 hervorgeht, ist zum Festlegen des Rohlings 4 auf der Bearbeitungsplattform 1 eine ebenfalls im Gehäuse 5 aufgenommene Gefrierspanneinheit 12 vorgesehen. Mithilfe der Gefrierspanneinheit 12 wird de Rohling 4 auf der Bearbeitungsplattform 1 unter Ausbildung einer den Rohling 4 umgebenden Eisschicht 13 gefriergespannt, welche über eine schraffierte Darstellung schematisch angedeutet ist.

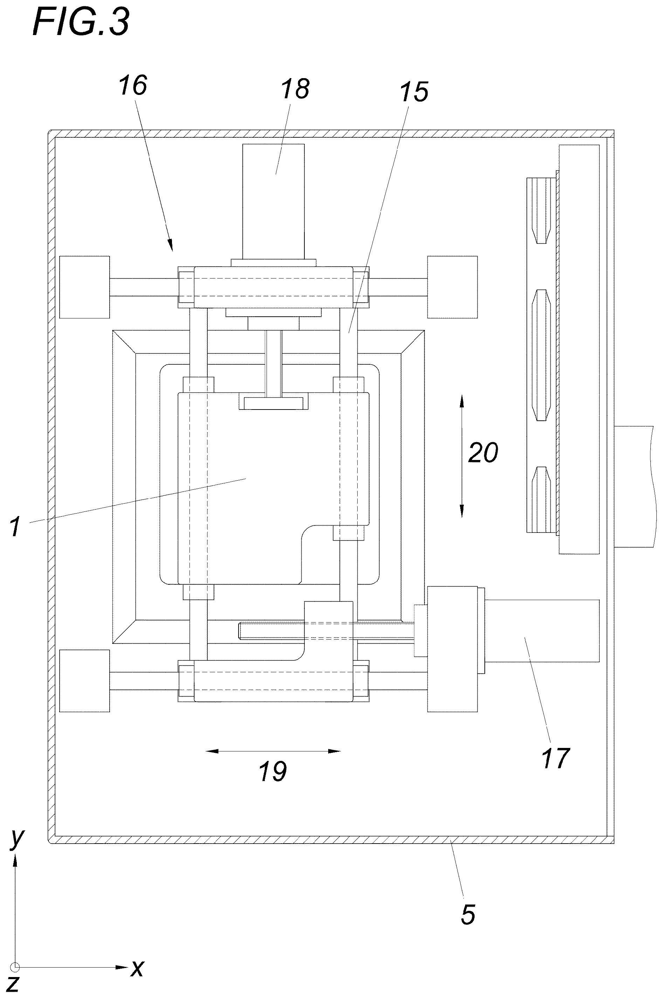

Für den Fräsvorgang wird zunächst der Deckel 6 in die Schließstellung verlagert, sodass der zylindrische Grundkörper 14 des Fräswerkzeuges 3 normal zur Bearbeitungsebene bzw. parallel zur z-Richtung verlaufend ausgerichtet ist. Dies wird in Fig. 1 schematisch anhand des strichpunktierten Grundkörpers 14 angedeutet, wobei dessen Position in z-Richtung aus Übersichtsgründen nicht exakt wiedergegeben ist. Das Fräswerkzeug 3 befindet sich somit stationär in der Bearbeitungsposition. Um daher für den Fräsvorgang das Fräswerkzeug 3 in der Bearbeitungsposition relativ gegenüber dem gefriergespannten Rohling 4 anzustellen, ist die Bearbeitungsplattform 1 mit einem einen Kreuzschlitten 15 umfassenden Lagerrahmen 16 antriebsverbunden ist, wie dies in Fig. 3 gezeigt ist. Der Lagerrahmen 16 weist zwei Lineareinheiten 17, 18 auf, die jeweils einer der beiden parallel zur Bearbeitungsebene sowie orthogonal zueinander verlaufenden Bearbeitungsrichtungen 19, 20 zugeordnet sind. Die Bearbeitungsrichtung 19 verläuft demnach parallel zur x-Richtung, wohingegen die Bearbeitungsrichtung 20 parallel zur y-Richtung verläuft.

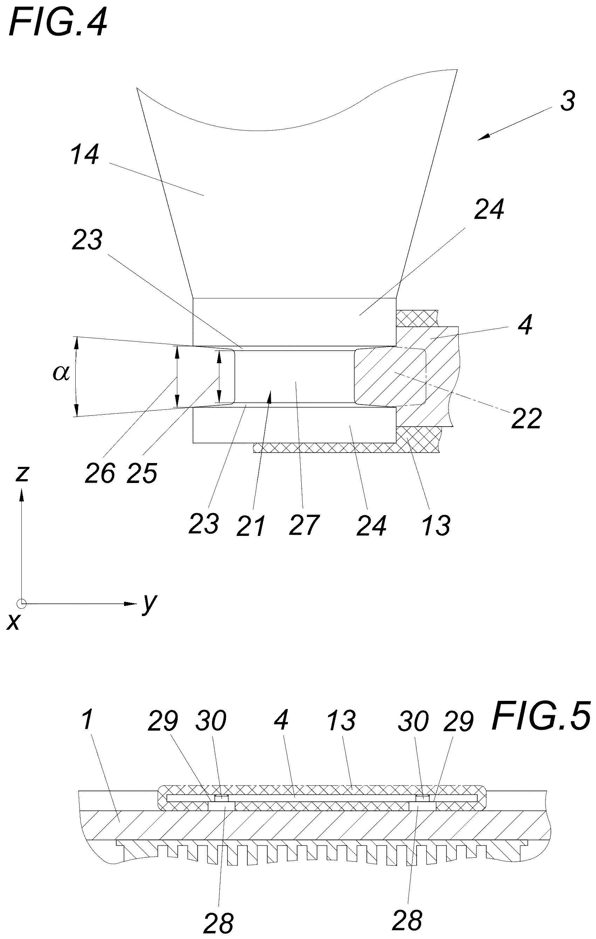

Wie dies aus der in Fig. 4 dargestellten Detailansicht hervorgeht, ist im Hinblick auf das Fräswerkzeug 3 am freien, konischen Endabschnitt des Grundkörpers 14 eine mantelseitig umlaufende Fräsnut 21 angeordnet. Beim Fräsvorgang wird somit über die Fräsnut Material vom Rohling 4 unter Ausbildung des Dental-Retainers 22 abgetragen. Die an die Nutwangen 23 der Fräsnut 21 anschließenden mantelseitigen Fräsflächen 24 tragen hingegen Material sowohl vom Rohling 4, als auch von der Eisschicht 13 ab. Um trotz der lediglich in der Bearbeitungsebene bzw. in x-y-Richtung erfolgenden Anstellbewegungen nicht nur einen Materialabtrag vom Rohling 4 in der Bearbeitungsebene, sondern auch in Normalrichtung zur Bearbeitungsebene bzw. in z-Richtung zu ermöglichen, ist die Fräsnut 21 so ausgestaltet, dass diese einen durch deren Nutwangen 23 vorgegebenen Öffnungswinkel α aufspannt, der 10° beträgt und dass das Verhältnis der Nutgrundbreite 25 zur lichten Nutweite 26 bei 1:1,3 liegt. Um außerdem eine bombierte Kontur des Dental-Retainers 22 zu ermöglichen, ist die Fräsnut 21 in den Übergangsbereichen zwischen den Nutwangen 23 und dem diese verbindenden Nutgrund 27 verrundet, wobei das Verhältnis des Verrundungsradius zur Nutgrundbreite b bei 1:9,5 liegt.

Darüber hinaus weist Die Bearbeitungsplattform 1 gemäß Fig. 1 und Fig. 5 drei sich normal zur Bearbeitungsebene erstreckende Rohlingauflagen 28 zur Beabstandung des Rohlings 4 von der Bearbeitungsplattform 1 auf. Dadurch kann sich auf zuverlässige Weise die Eisschicht 13 auch im Bereich zwischen der Bearbeitungsplattform 1 und der Unterseite des Rohlings 4 ausbilden. Um dabei besonders stabile Auflagebedingungen zu schaffen, sind die Rohlingauflagen 28 bezüglich der Bearbeitungsebene so versetzt zueinander angeordnet, dass diese gemeinsam ein Auflagedreieck aufspannen (Fig. 1). Wie dies in Fig. 5 außerdem gezeigt ist, umfassen die Rohlingauflagen 28 jeweils einen Auflagekörper, der eine Auflageschulter 29 sowie einen von der Auflageschulter 29 in Auflagekörperlängsrichtung nach oben abragenden Positionierzapfen 30 für den Rohling 4 aufweist. Dabei durchsetzen die jeweiligen Positionierzapfen 30 entsprechende Positionieröffnungen des Rohlings 4.

## Patentansprüche

1. Vorrichtung zur Herstellung von Dental-Retainern (22) aus einem Rohling (4), mit einer eine Bearbeitungsebene aufspannenden Bearbeitungsplattform (1) und einer Fräseinheit (2), die ein Fräswerkzeug (3) zur Bearbeitung des Rohlings (4) auf der Bearbeitungsplattform (1) umfasst, wobei das Fräswerkzeug (3) relativ zur Bearbeitungsplattform (1) ausschließlich in der Bearbeitungsebene verlagerbar ist, **dadurch gekennzeichnet, dass** eine Gefrierspanneinheit (12) zum Festlegen des Rohlings (4) auf der Bearbeitungsplattform (1) unter Ausbildung einer den Rohling (4) wenigstens teilweise umgebenden Eisschicht (13) vorgesehen ist und dass das Fräswerkzeug (3) einen in einer Bearbeitungsposition normal zur Bearbeitungsebene verlaufenden Grundkörper (14) umfasst, an dessen freiem Endabschnitt eine mantelseitig umlaufende Fräsnut (21) angeordnet ist, die in der Bearbeitungsebene relativ gegenüber dem gefriergespannten Rohling (4) anstellbar ist.

2. Vorrichtung nach Anspruch 1, **dadurch gekennzeichnet, dass** die Bearbeitungsplattform (1) gegenüber dem in der Bearbeitungsposition stationären Fräswerkzeug (3) in der Bearbeitungsebene, vorzugsweise ausschließlich entlang zwei parallel zur Bearbeitungsebene sowie orthogonal zueinander verlaufenden Bearbeitungsrichtungen (19, 20), verlagerbar ist.

3. Vorrichtung nach Anspruch 2, **dadurch gekennzeichnet, dass** die Bearbeitungsplattform (1) mit einem Lagerrahmen (16) antriebsverbunden ist, der zwei Lineareinheiten (17, 18) umfasst, die jeweils einer der beiden parallel zur Bearbeitungsebene sowie orthogonal zueinander verlaufenden Bearbeitungsrichtungen (19, 20) zugeordnet sind.

4. Vorrichtung nach einem der Ansprüche 1 bis 3, **dadurch gekennzeichnet, dass** die Fräsnut (21) einen durch deren Nutwangen (23) vorgegebenen Öffnungswinkel (α) im Bereich von 5° bis 15° aufspannt, wobei insbesondere das Verhältnis der Nutgrundbreite (25) zur lichten Nutweite (26) im Bereich von 1:1,2 bis 1:1,5, vorzugsweise von 1:1,3 bis 1:1,4, liegt.

5. Vorrichtung nach Anspruch 4, **dadurch gekennzeichnet, dass** die Fräsnut (21) in den Übergangsbereichen zwischen den Nutwangen (23) und dem diese verbindenden Nutgrund (27) verrundet ist, wobei das Verhältnis des Verrundungsradius zur Nutgrundbreite (b) im Bereich von 1:5 bis 1:15, vorzugsweise von 1:9 bis 1:13, liegt.

6. Vorrichtung nach einem der Ansprüche 1 bis 5, **dadurch gekennzeichnet, dass** die Bearbeitungsplattform (1), insbesondere drei, sich normal zur Bearbeitungsebene erstreckende Rohlingauflagen (28) zur Beabstandung des Rohlings (4) von der Bearbeitungsplattform (1) aufweist.

7. Vorrichtung nach Anspruch 6, **dadurch gekennzeichnet, dass** die Rohlingauflagen (28) jeweils einen Auflagekörper umfassen, der eine Auflageschulter (29) sowie einen von der Auflageschulter (29) in Auflagekörperlängsrichtung nach oben abragenden Positionierzapfen (30) für den Rohling (4) aufweist.

8. Vorrichtung nach einem der Ansprüche 1 bis 7, **gekennzeichnet durch** ein die Bearbeitungsplattform (1) und die Gefrierspanneinheit (12) aufnehmendes Gehäuse (5), das eine mit einem Deckel (6) verschließbare Bearbeitungsöffnung (7) aufweist, wobei die Fräseinheit (2) an dem zwischen einer Offenstellung und einer Schließstellung verlagerbaren Deckel (6) angeordnet ist.

9. Verfahren zur Herstellung von Dental-Retainern (22) aus einem Rohling (4), der mithilfe eines Fräswerkzeuges (3) bearbeitet wird, **dadurch gekennzeichnet, dass** der Rohling (4) auf einer eine Bearbeitungsebene aufspannenden Bearbeitungsplattform (1) unter Ausbildung einer den Rohling (4) wenigstens teilweise umgebenden Eisschicht (13) gefriergespannt wird, und dass zum Materialabtrag vom Rohling (4) die Relativbewegungen zwischen diesem und dem dabei vorzugsweise stationären Fräswerkzeug (3) ausschließlich in der Bearbeitungsebene erfolgen.

10. Verfahren nach Anspruch 9, **dadurch gekennzeichnet, dass** während der Bearbeitung des gefriergespannten Rohlings (4) durch das Fräswerkzeug (3) bedarfsweise Gefriermittel auf die Bearbeitungsplattform (1) so nachgefördert wird und / oder die Bearbeitungsplattform (1) unter Ausbildung einer Eisschicht (13) so gekühlt wird, dass bereits abgefräste Eisschichtbereiche wiederhergestellt werden.
